# EUROPEAN PATENT APPLICATION

(11) **EP 4 811 194 A1**
(43) Date of publication of application: **23.09.2026**
(21) Application number: 26165469.3
(22) Date of filing: 17.03.2026
(51) Int. Cl.: G06F 21/56

(54) **TERMINATING MALWARE EXECUTION ON AN ENDPOINT COMPUTING DEVICE**

(30) Priority: 18.03.2025 US 202519082806
(71) Applicant: Sophos Limited, Abingdon, Oxfordshire OX14 3YP (GB)
(72) Inventor: Rychliski, Mikel, Abingdon, OX14 3YP (GB)
(74) Representative: Black, Diego

(57) **Abstract**

Methods, systems, and computer program products for terminating malware execution on an endpoint computing device include generating a shadow process data structure on an endpoint computing device; creating a malware detection record based upon a received malware verdict; detecting one or more software processes in the shadow process data structure associated with a malware process identified in the malware verdict; for each detected software process being executed: initiating a process termination request for the detected software process and updating the malware detection record based upon acceptance or rejection of the process termination request, and determining whether a malware termination operation on the endpoint computing device is complete based on the malware detection record.

## Description

### TECHNICAL FIELD

The subject matter of the technology described herein relates generally to methods, systems, and computer program products for terminating malware execution on an endpoint computing device.

### BACKGROUND

Malware uses different ways to identify and exploit vulnerabilities in a target computing system, such as an endpoint computing device. One way that malware attacks a target system is to execute one or more process threads running in the user space. For example, malware may attempt to execute a process which spawns many descendant processes then immediately exits, thereby making it more difficult for security features on the endpoint devices to detect and track the malicious activity by the descendants.

In addition, certain endpoint computing devices may not be configured to accommodate real-time malware scanning and detection. Instead, these devices rely on asynchronous malware analysis, where an underlying access operation (that may be performed by malware) is permitted to complete successfully before a malware conclusion has been made. If an asynchronously scan results in a malware verdict, the malware typically has already begun executing on the endpoint device and may have spawned any number of subsequent processes. Also, between the time malware remediation begins terminating malware processes and the time those processes actually stop, the same processes could create additional descendant processes.

### SUMMARY

In general, to overcome the above-identified deficiencies, it may be beneficial to provide methods, systems, and computer program products that protect computing devices, such as endpoint computing devices, against malicious activity related to execution of malware programs. The methods and systems described herein advantageously maintain a shadow process tree to detect the execution of malware processes (and any related descendant processes) based upon a malware verdict. The techniques described herein beneficially provide for malware detection and termination in endpoint devices where real-time malware scanning may not be desired due to performance or availability reasons.

In general, in an aspect, a system for terminating malware execution on an endpoint computing device may include one or more computer-readable media having computer-executable instructions stored thereon; and one or more processors that, having executed the computer-executable instructions, are configured to: generate a shadow process data structure based on software process events captured on an endpoint computing device; create a malware detection record based upon a received malware verdict; detect one or more software processes in the shadow process data structure associated with a malware process identified in the malware verdict; update the malware detection record to include first indicia for the detected software processes; for each detected software process being executed: initiate a process termination request for the detected software process and update the malware detection record to include second indicia for the detected software process based upon acceptance or rejection of the process termination request, and for each detected software process that has completed execution: update the malware detection record to include third indicia for the detected software process; and determine whether a malware termination operation is complete on the endpoint computing device.

In general, in an aspect, a method for terminating malware execution on an endpoint computing device may include generating a shadow process data structure on an endpoint computing device; creating a malware detection record based upon a received malware verdict; detecting one or more software processes in the shadow process data structure associated with a malware process identified in the malware verdict; for each detected software process being executed: initiating a process termination request for the detected software process and updating the malware detection record based upon acceptance or rejection of the process termination request, and determining whether a malware termination operation on the endpoint computing device is complete based on the malware detection record.

In some implementations, the software process events include process creation events and process exit events. In some implementations, the software process events are captured from a circular buffer maintained by an operating system kernel on the endpoint computing device.

In some implementations, the malware verdict is generated from an asynchronous scan of the endpoint computing device. In some implementations, detecting one or more software processes in the shadow process data structure associated with the malware process identified in the malware verdict comprises: detecting a first software process in the shadow process data structure that corresponds to the malware process; and navigating the shadow process data structure to detect one or more additional software processes that are related to the first software process.

In some implementations, the first indicia for the detected software processes in the malware detection record comprises an identifier stored in an observed processes list. In some implementations, when the process termination request is accepted, the second indicia for the detected software processes in the malware detection record comprises an identifier stored in a killed processes list. In some implementations, when the process termination request is rejected, the second indicia for the detected software processes in the malware detection record comprises an identifier stored in a failed to kill processes list. In some implementations, the third indicia for the detected software processes in the malware detection record comprises an identifier stored in an exited processes list.

In some implementations, the malware termination operation on the endpoint computing device is deemed to be complete upon receiving a quarantine report associated with the malware verdict and determining that any process terminations initiated in the operating system kernel have completed.. In some implementations, the malware termination operation on the endpoint computing device is deemed to be complete upon expiration of a period of time after the malware verdict is received.

Other aspects and advantages of the technology will become apparent from the following detailed description, taken in conjunction with the accompanying drawings, illustrating the principles of the technology by way of example only.

### BRIEF DESCRIPTION OF THE DRAWINGS

The advantages of the technology described above, together with further advantages, may be better understood by referring to the following description taken in conjunction with the accompanying drawings. The drawings are not necessarily to scale, emphasis instead generally being placed upon illustrating the principles of the technology.
FIG. 1 illustrates a system for enterprise network threat detection, according to one example embodiment.
FIG. 2 illustrates a threat management system, according to one example embodiment.
FIG. 3 illustrates a block diagram of an endpoint computing device according to embodiments.
FIG. 4 illustrates a flow diagram of a method for terminating malware execution on an endpoint computing device, according to one embodiment.
FIG. 5 is a diagram of a data structure for a malware detection record, according to an embodiment.

### DETAILED DESCRIPTION

Embodiments will now be described with reference to the accompanying figures. The foregoing may, however, be embodied in many different forms and should not be construed as limited to the illustrated embodiments set forth herein.

All documents mentioned herein are hereby incorporated by reference in their entirety. References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately" or the like, when accompanying a numerical value, are to be construed as indicating a deviation as would be appreciated by one of ordinary skill in the art to operate satisfactorily for an intended purpose. Similarly, words of approximation such as "approximately" or "substantially" when used in reference to physical characteristics, should be understood to contemplate a range of deviations that would be appreciated by one of ordinary skill in the art to operate satisfactorily for a corresponding use, function, purpose, or the like. Ranges of values and/or numeric values are provided herein as examples only, and do not constitute a limitation on the scope of the described embodiments. Where ranges of values are provided, they are also intended to include each value within the range as if set forth individually, unless expressly stated to the contrary. The use of any and all examples, or exemplary language ("e.g.," "such as," or the like) provided herein, is intended merely to better illuminate the embodiments and does not pose a limitation on the scope of the embodiments. No language in the specification should be construed as indicating any unclaimed element as essential to the practice of the embodiments.

In the following description, it is understood that terms such as "first," "second," "top," "bottom," "up," "down," and the like, are words of convenience and are not to be construed as limiting terms.

It should also be understood that endpoints, devices, compute instances or the like that are referred to as "within" an enterprise network may also be "associated with" the enterprise network, e.g., where such assets are outside an enterprise gateway but nonetheless managed by or in communication with a threat management facility or other centralized security platform for the enterprise network. Thus, any description referring to an asset within the enterprise network should be understood to contemplate a similar asset associated with the enterprise network regardless of location in a network environment unless a different meaning is explicitly provided or otherwise clear from the context.

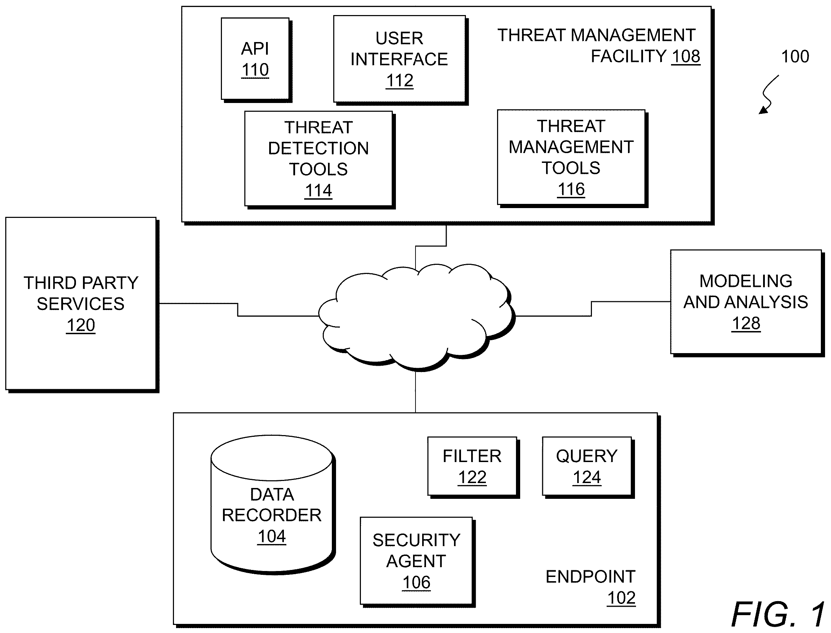

FIG. 1 shows a system 100 for enterprise network threat detection. In the system, a number of endpoint computing devices, such as endpoint 102, may log events in a data recorder 104. A local agent on the endpoint 102 such as the security agent 106 may filter this data and feed a filtered data stream to a threat management facility 108 such as a central threat management facility. The threat management facility 108 can locally or globally tune filtering by local agents based on the current data stream and can query local event data recorders for additional information where necessary or helpful in threat detection or forensic analysis. The threat management facility 108 may also or instead store and deploys a number of security tools such as a web-based user interface that is supported by machine learning models to aid in the identification and assessment of potential threats by a human user. This may, for example, include machine learning analysis of new code samples, models to provide human-readable context for evaluating potential threats, and any of the other tools or techniques described herein. More generally, the threat management facility 108 may provide any of a variety of threat detection tools 114 and/or threat management tools 116 to aid in the detection, evaluation, and remediation of threats or potential threats.

The threat management facility 108 may perform a range of threat management functions such as any of those described herein. The threat management facility 108 may generally include an application programming interface 110 to third party services 120, a user interface 112 for access to threat management and network administration functions, and a number of threat detection tools 114 and threat management tools 116.

In general, the application programming interface 110 may support programmatic connections with third party services 120. The application programming interface 110 may, for example, connect to Active Directory or other customer information about files, data storage, identities and user profiles, roles, access privileges and so forth. More generally, the application programming interface 110 may provide a programmatic interface for customer or other third-party context, information, administrative, and security tools, and so forth. The application programming interface 110 may also or instead provide a programmatic interface for hosted applications, identity provider integration tools or services, and so forth.

The user interface 112 may include a website or other graphical interface or the like and may generally provide an interface for user interaction with the threat management facility 108, e.g., for threat detection, network administration, audit, configuration and so forth. This user interface 112 may generally facilitate human curation of intermediate threats as contemplated herein, e.g., by presenting intermediate threats along with other supplemental information, and providing controls for user to dispose of such intermediate threats as desired, e.g., by permitting execution or access, by denying execution or access, or by engaging in remedial measures such as sandboxing, quarantining, vaccinating, and so forth.

The threat detection tools 114 may be any of the threat detection tools, algorithms, techniques or the like described herein, or any other tools or the like useful for detecting threats or potential threats within an enterprise network. This may, for example, include signature-based tools, behavioral tools, machine learning models, and so forth. In general, the threat detection tools 114 may use event data provided by endpoints within the enterprise network, as well as any other available context such as network activity, heartbeats, and so forth to detect malicious software or potentially unsafe conditions for a network or endpoints connected to the network. In one aspect, the threat detection tools 114 may usefully integrate event data from a number of endpoints (including, e.g., network components such as gateways, routers, and firewalls) for improved threat detection in the context of complex or distributed threats. The threat detection tools 114 may also or instead include tools for reporting to a separate modeling and analysis platform 128, e.g., to support further investigation of security issues, creation or refinement of threat detection models or algorithms, review and analysis of security breaches, and so forth.

The threat management tools 116 may generally be used to manage or remediate threats to the enterprise network that have been identified with the threat detection tools 114 or otherwise. Threat management tools 116 may, for example, include tools for sandboxing, quarantining, removing, or otherwise remediating or managing malicious code or malicious activity, e.g., using any of the techniques described herein.

The endpoint 102 may be any of the endpoints or other compute instances or the like described herein. This may, for example, include end-user computing devices, mobile devices, firewalls, gateways, servers, routers and any other computing devices or instances that might connect to an enterprise network. The endpoint 102 may generally include a security agent 106 that locally supports threat management on the endpoint 102, such as by monitoring for malicious activity, managing security components on the endpoint 102, maintaining policy compliance, and communicating with the threat management facility 108 to support integrated security protection as contemplated herein. The security agent 106 may, for example, coordinate instrumentation of the endpoint 102 to detect various event types involving various computing objects on the endpoint 102 and supervise logging of events in a data recorder 104. The security agent 106 may also or instead scan computing objects such as electronic communications or files, monitor behavior of computing objects such as executables, and so forth. The security agent 106 may, for example, apply signature-based or behavioral threat detection techniques, machine learning models (e.g., models developed by the modeling and analysis platform), or any other tools or the like suitable for detecting malware or potential malware on the endpoint 102.

The data recorder 104 may log events occurring on or related to the endpoint. This may, for example, include events associated with computing objects on the endpoint 102 such as file manipulations, software installations, and so forth. This may also or instead include activities directed from the endpoint 102, such as requests for content from Uniform Resource Locators or other network activity involving remote resources. The data recorder 104 may record data at any frequency and any level of granularity consistent with proper operation of the endpoint 102 in an intended or desired manner.

The endpoint 102 may include a filter 122 to manage a flow of information from the data recorder 104 to a remote resource such as the threat detection tools 114 of the threat management facility 108. In this manner, a detailed log of events may be maintained locally on each endpoint, while network resources can be conserved for reporting of a filtered event stream that contains information believed to be most relevant to threat detection. The filter 122 may also or instead be configured to report causal information that causally relates collections of events to one another. In general, the filter 122 may be configurable so that, for example, the threat management facility 108 can increase or decrease the level of reporting based on a current security status of the endpoint, a group of endpoints, the enterprise network, and the like. The level of reporting may also or instead be based on currently available network and computing resources, or any other appropriate context.

In another aspect, the endpoint 102 may include a query interface 124 so that remote resources such as the threat management facility 108 can query the data recorder 104 remotely for additional information. This may include a request for specific events, activity for specific computing objects, or events over a specific time frame, or some combination of these. Thus, for example, the threat management facility 108 may request all changes to the registry of system information for the past forty-eight hours, all files opened by system processes in the past day, all network connections or network communications within the past hour, or any other parametrized request for activities monitored by the data recorder 104. In another aspect, the entire data log, or the entire log over some predetermined window of time, may be requested for further analysis at a remote resource.

It will be appreciated that communications among third party services 120, a threat management facility 108, and one or more endpoints such as the endpoint 102 may be facilitated by using consistent naming conventions across products and machines. For example, the system 100 may usefully implement globally unique device identifiers, user identifiers, application identifiers, data identifiers, Uniform Resource Locators, network flows, and files. The system may also or instead use tuples to uniquely identify communications or network connections based on, e.g., source and destination addresses and so forth.

According to the foregoing, a system disclosed herein includes an enterprise network, an endpoint coupled to the enterprise network, and a threat management facility coupled in a communicating relationship with the endpoint and a plurality of other endpoints through the enterprise network. The endpoint may have a data recorder that stores an event stream of event data for computing objects, a filter for creating a filtered event stream with a subset of event data from the event stream, and a query interface for receiving queries to the data recorder from a remote resource, the endpoint further including a local security agent configured to detect malware on the endpoint based on event data stored by the data recorder, and further configured to communicate the filtered event stream over the enterprise network. The threat management facility may be configured to receive the filtered event stream from the endpoint, detect malware on the endpoint based on the filtered event stream, and remediate the endpoint when malware is detected, the threat management facility further configured to modify security functions within the enterprise network based on a security state of the endpoint.

The threat management facility may be configured to adjust reporting of event data through the filter in response to a change in the filtered event stream received from the endpoint. The threat management facility may be configured to adjust reporting of event data through the filter when the filtered event stream indicates a compromised security state of the endpoint. The threat management facility may be configured to adjust reporting of event data from one or more other endpoints in response to a change in the filtered event stream received from the endpoint. The threat management facility may be configured to adjust reporting of event data through the filter when the filtered event stream indicates a compromised security state of the endpoint. The threat management facility may be configured to request additional data from the data recorder when the filtered event stream indicates a compromised security state of the endpoint. The threat management facility may be configured to request additional data from the data recorder when a security agent of the endpoint reports a security compromise independently from the filtered event stream. The threat management facility may be configured to adjust handling of network traffic at a gateway to the enterprise network in response to a predetermined change in the filtered event stream. The threat management facility may include a machine learning model for identifying potentially malicious activity on the endpoint based on the filtered event stream. The threat management facility may be configured to detect potentially malicious activity based on a plurality of filtered event streams from a plurality of endpoints. The threat management facility may be configured to detect malware on the endpoint based on the filtered event stream and additional context for the endpoint.

The data recorder may record one or more events from a kernel driver. The data recorder may record at least one change to a registry of system settings for the endpoint. The endpoints may include a server, a firewall for the enterprise network, a gateway for the enterprise network, or any combination of these. The endpoint may be coupled to the enterprise network through a virtual private network or a wireless network. The endpoint may be configured to periodically transmit a snapshot of aggregated, unfiltered data from the data recorder to the threat management facility for remote storage. The data recorder may be configured to delete records in the data recorder corresponding to the snapshot in order to free memory on the endpoint for additional recording.

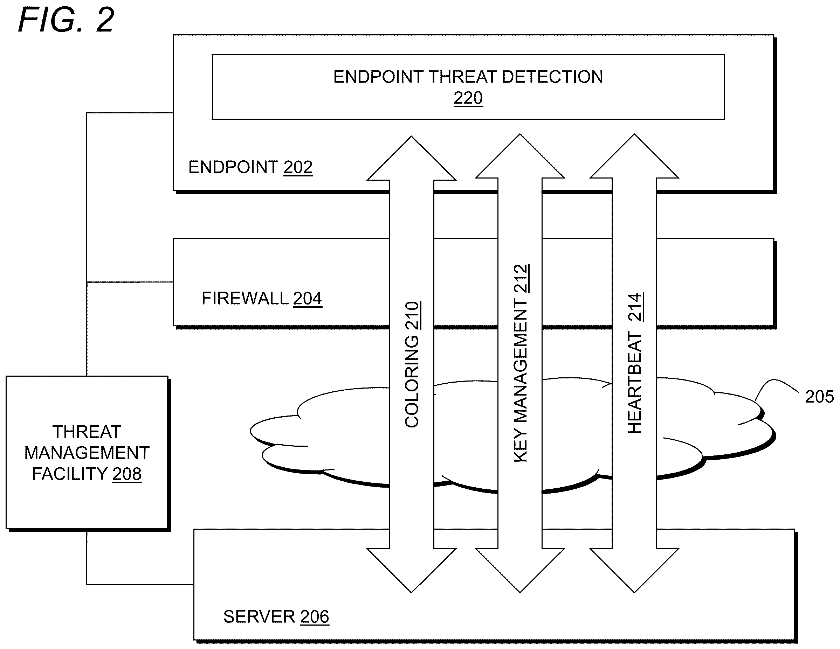

FIG. 2 illustrates a threat management system. In general, the system may include an endpoint 202, a firewall 204, a server 206 and a threat management facility 208 coupled to one another directly or indirectly through a data network 205, all as generally described above. Each of the entities depicted in FIG. 2 may, for example, be implemented on one or more computing devices such as the computing device described herein. A number of systems may be distributed across these various components to support threat detection, such as a coloring system 210, a key management system 212 and a heartbeat system 214, each of which may include software components executing on any of the foregoing system components, and each of which may communicate with the threat management facility 208 and an endpoint threat detection agent 220 executing on the endpoint 202 to support improved threat detection and remediation.

The coloring system 210 may be used to label or color software objects for improved tracking and detection of potentially harmful activity. The coloring system 210 may, for example, label files, executables, processes, network communications, data sources and so forth with any suitable information. A variety of techniques may be used to select static and/or dynamic labels for any of these various software objects, and to manage the mechanics of applying and propagating coloring information as appropriate. For example, a process may inherit a color from an application that launches the process. Similarly, a file may inherit a color from a process when it is created or opened by a process, and/or a process may inherit a color from a file that the process has opened. More generally, any type of labeling, as well as rules for propagating, inheriting, changing, or otherwise manipulating such labels, may be used by the coloring system 210 as contemplated herein.

The key management system 212 may support management of keys for the endpoint 202 in order to selectively permit or prevent access to content on the endpoint 202 on a file-specific basis, a process-specific basis, an application-specific basis, a user-specific basis, or any other suitable basis in order to prevent data leakage, and in order to support more fine-grained and immediate control over access to content on the endpoint 202 when a security compromise is detected. Thus, for example, if a particular process executing on the endpoint is compromised, or potentially compromised or otherwise under suspicion, keys to that process may be revoked in order to prevent, e.g., data leakage or other malicious activity.

The heartbeat system 214 may be used to provide periodic or aperiodic information from the endpoint 202 or other system components about system health, security, status, and so forth. A heartbeat may be encrypted or plaintext, or some combination of these, and may be communicated unidirectionally (e.g., from the endpoint 202 to the threat management facility 208) or bidirectionally (e.g., between the endpoint 202 and the server 206, or any other pair of system components) on any useful schedule.

In general, these various monitoring and management systems may cooperate to provide improved threat detection and response. For example, the coloring system 210 may be used to evaluate when a particular process is potentially opening inappropriate files based on an inconsistency or mismatch in colors, and a potential threat may be confirmed based on an interrupted heartbeat from the heartbeat system 214. The key management system 212 may then be deployed to revoke keys to the process so that no further files can be opened, deleted, or otherwise modified. More generally, the cooperation of these systems enables a wide variety of reactive measures that can improve detection and remediation of potential threats to an endpoint.

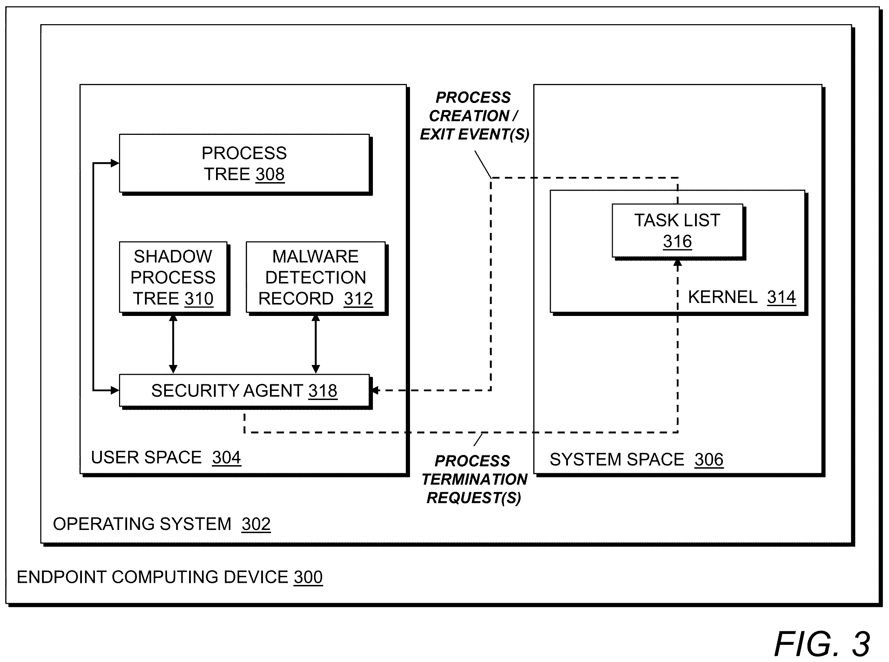

FIG. 3 is a block diagram of an endpoint computing device 300. The endpoint computing device 300 may be executing an operating system 302, such as the Linux^{™} operating system. According to general computing principles, the operating system 302 may include any system software that manages computer hardware and software resources and provides common service for computer programs such as input, output, memory allocation, file storage, and so forth. In general, an application will execute in the user space 304, e.g., as a process (or multiple processes) that owns and executes one or more threads. The operating system 302 monitors and manages the execution of a tree of processes 308 located in the user space 304 via a task list 316. When a process operation is performed, the process 308 issues one or more calls (e.g., via a system call) to a task list 316 executing in the system space 306 of the operating system kernel 314. In some implementations, the task list 316 is a circular buffer (e.g., circular doubly linked list) that maintains information about specific processes being executed in the user space 304.

As described previously, the endpoint 300 includes a security agent 318 that supports threat management on the endpoint 300, such as by monitoring for malicious activity, managing security components on the endpoint 300, maintaining policy compliance, and communicating with the threat management facility 108 to support integrated security protection as contemplated herein. The security agent 318 can include a plurality of endpoint protection layers that are configured to perform certain threat detection operations, threat management operations, and/or threat remediation operations on the endpoint 300. In some implementations, the security agent 318 maintains a shadow process tree 310 and a malware detection record 312. The shadow process tree 310 comprises a one-to-one replication of the active process tree 308 in the user space 304. The security agent 318 captures process creation events and process exit events from the task list 316 in the kernel 314 and applies the captured events to the shadow process tree 310. In some implementations, the shadow process tree 310 is configured to store process information that may no longer be contained in the active process tree 308. For example, a process executing in operating system 302 may exit, at which point the process record is removed from the active process tree 308. However, due to latency between the time the process exits and the time that the security agent 318 captures the process exit event, the shadow process tree 310 may still contain the process record for the exited process. In some implementations, the security agent 318 maintains process record(s) for exited processes for a defined period of time after the process exit event is captured in order to maintain a short-term history of processes that have executed in the operating system 302. Advantageously, as explained in greater detail below, this technique enables the security agent 318 to track process activity relating to potential or actual malware on the endpoint computing device 300 even in circumstances when the malware processes have already exited from the active process tree 308 and/or spawned child processes-which would render malware remediation more difficult if the security agent was relying only on the active process tree 308.

The malware detection record 312 is a data structure (e.g., a table) maintained by the security agent 318 that contains a list of entries associated with potential or actual malware activity on the endpoint computing device 300. Generally, and without limitation, each entry in the malware detection record 312 is based upon a malware verdict received by the security agent 318. For example, the security agent 318 and/or a remote computing device (such as the threat management facility 108) can periodically perform an asynchronous scan of the endpoint computing device 300 that attempts to determine whether any suspected or known malware is resident on the endpoint computing device 300. The asynchronous scan can include analyzing the active process tree 308 to identify any process(es) executing on the endpoint computing device 300 that are associated with malware. In some implementations, a malware verdict resulting from the asynchronous scan includes one or more process identifiers (e.g., PID) corresponding to malware. The security agent 318 receives the malware verdict and creates a new entry with a unique identifier in the malware detection record 312. The security agent 318 then uses the newly created entry to track process information associated with the malware verdict.

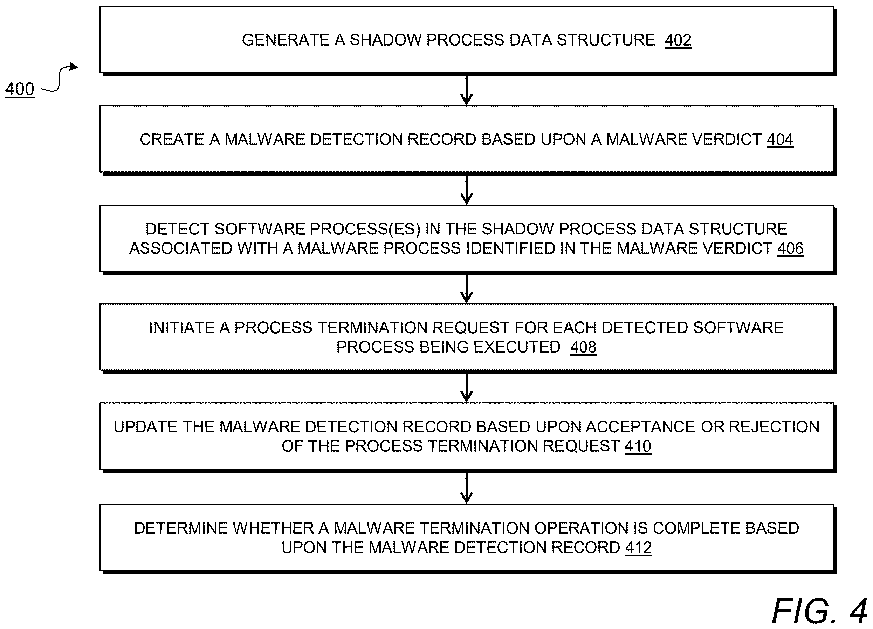

FIG. 4 is a flow diagram of a method 400 for terminating malware execution on an endpoint computing device, according to an embodiment. The method 400 may be performed by one or more systems, devices, and/or components illustrated in FIGS. 1-3 and is discussed by way of reference thereto.

At block 402, the method may include generating a shadow process data structure (i.e., shadow process tree 310) on an endpoint computing device (i.e., endpoint 300). As described above, the security agent 318 generates and maintains the shadow process tree 310 upon capturing process creation events and process exit events being processed by the operating system 302 and stored in the task list 316 in the operating system kernel 314. For example, upon capturing a process creation event (from the task list 316), the security agent 318 updates the shadow process tree 310 to include information relating to the process being created in the process creation event (e.g., PID, process name, parent/child dependencies, etc.). In another example, upon capturing a process exit event, the security agent 318 updates the shadow process tree 310 to remove information relating to the process being exited in the process exit event. As noted previously, in some implementations the security agent 318 can maintain process information in the shadow process tree 310 for exited processes for a defined period of time (e.g., 30 seconds, 1 minute, 5 minutes, etc.) after the processes have exited from the active process tree 308. As can be appreciated, a malware process executing in the operating system 302 may spawn a number of child processes and then immediately exit. Due to the latency between (a) the time that the malware process executes and (b) the time that the security agent 318 receives a malware verdict and begins monitoring for the malware process, the malware process may have already spawned its child process(es) and exited-thereby removing the process information from the active process tree 308. As a result, the security agent 318 cannot rely on the data contained in the active process tree 308 to perform malware remediation tasks, such as triggering process termination. Instead, the security agent 318 advantageously captures the malware process events from the task list 316 and applies them to the shadow process tree 310 as they happen. Then, when the malware verdict is subsequently received, the security agent 318 can analyze the information contained therein to initiate malware remediation tasks.

At block 404, the method may include creating a malware detection record (i.e., malware detection record 312) based upon a received malware verdict. In some implementations, an asynchronous scan is performed on the endpoint computing device 300 to detect activity relating to potential or actual malware being executed on the endpoint computing device 300. For example, the security agent 318 may continually or periodically analyze the operating system 302 of the endpoint computing device 300 to generate a malware verdict that identifies processes associated with malware on the endpoint 300. In some implementations, the security agent 318 can transmit process information to a remote computing device (e.g., threat management facility 108), which analyzes the process information to identify potential or actual malware processes on the endpoint computing device 300. In either scenario, the malware verdict contains information (e.g., PIDs) that identifies malware processes. The security agent 318 uses the information contained in the malware verdict to create an entry in the malware detection record 312.

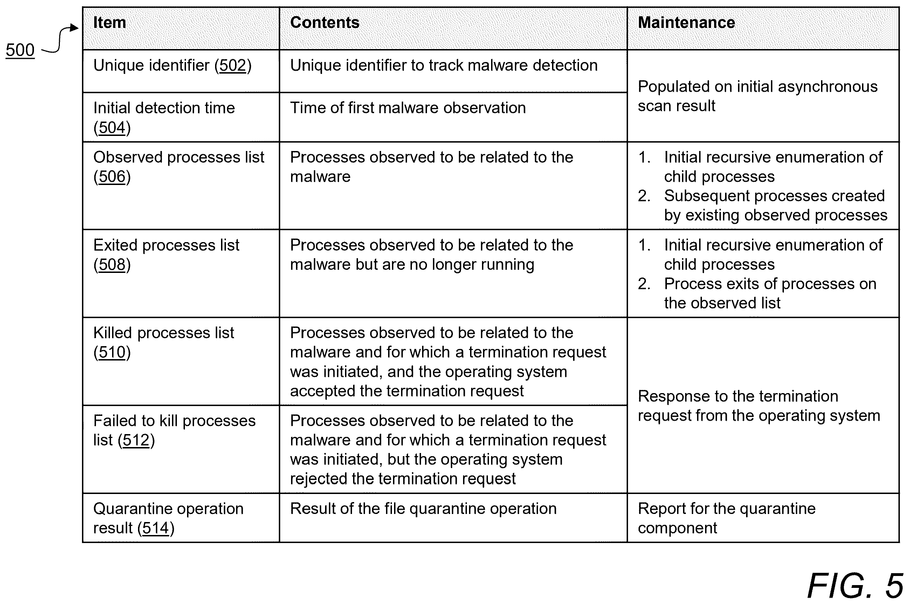

FIG. 5 is a diagram of a data structure 500 for the malware detection record 312, according to an embodiment. As shown in FIG. 5, in some implementations each entry in the malware detection record 312 includes a unique identifier 502 to track process detection associated with the malware verdict. Each entry in the malware detection record 312 also includes an initial detection time 504 that corresponds to the time that the malware was first observed on the endpoint computing device 300. In some implementations, the initial detection time 504 is the time at which the asynchronous scan was performed on the endpoint computing device 300. The security agent 318 can populate the unique identifier and the initial detection time upon receiving the malware verdict.

Turning back to FIG. 4, the security agent 318 analyzes the shadow process tree 310 based upon process information contained in the malware verdict. At step 406, the security agent 318 detects one or more software processes in the shadow process tree 310 associated with a malware process identified in the malware verdict. During this step, the security agent 318 identifies (e.g., via lookup) any processes in the shadow process tree 310 that have an identifier (e.g., PID) corresponding to the malware verdict. The security agent 318 then recursively traverses the shadow process tree 310 to identify any existing parent or child processes of the processes in the malware verdict, and the security agent 318 adds those parent / child processes to the observed processes list 506 in the corresponding malware detection record 312. In some implementations, the security agent 318 continuously updates the observed processes list in the malware detection record 312 based upon the receipt of process creation events that identify additional processes subsequently created by existing observed malware processes.

The security agent 318 also analyzes the shadow process tree 310 to identify any processes that have already exited from the active process tree 308. The security agent 318 identifies a process in the shadow process tree 310 that is associated with the malware verdict, and then determines whether the identified process already exited (and thereby no longer appears in the active process tree 308). In some implementations, the security agent 318 receives a process exit event (including a PID) from the task list 316 in kernel 314 and updates the shadow process tree 310 with indicia to denote that the process is no longer running in the active process tree 308. The security agent 318 can then refer to the indicia in the shadow process tree 310 when determining whether the process is no longer running. For processes that are not running, the security agent 318 adds the process information to the exited processes list 508 of the malware detection record 312. In some implementations, the security agent 318 can add process information to the exited processes list 508 during the above-described recursive enumeration of parent/child processes from processes in the malware verdict.

At step 408, the security agent 318 initiates a process termination request for each software process identified in the observed processes list 506 that is not also identified in the exited processes list 508 for the malware verdict entry in the malware detection record 312. In some implementations, the security agent 318 transmits a process termination request for the identified process(es) to the operating system 302, which triggers an instruction to terminate execution of the identifies process(es). Also, as subsequent processes are created in the active process tree 308 via process creation events, the security agent 318 inspects the creating process and determines if the PID of the creating process is contained in the observed processes list 506 for any of the malware verdict entries in the record 312. If so, the security agent 318 confirms that the subsequent process was created by the malware process. It may be the case that termination requests on prior processes may not have completed yet. In this situation, the security agent 318 adds the subsequent process to the observed processes list 506 and initiates a process termination request for the subsequent process. In each case where the security agent 318 has initiated a process termination request with the operating system 302, the security agent 318 waits for a response from the operating system 302 that indicates whether the process termination request was accepted or rejected.

At step 410, upon receiving the response the security agent 318 updates the malware detection record 312 based upon acceptance or rejection of the process termination request by the operating system 302. In cases where the process termination request is accepted, the security agent 318 adds indicia (e.g., PID) for the process(es) that were terminated to the killed processes list 510 of the corresponding malware verdict entry in the malware detection record 312. As can be appreciated, an accepted process termination request results in a process exit event being generated by the operating system 302. The security agent 318 captures these process exit events and analyzes each entry in the malware detection record 312 to determine whether the process ID associated with the process exit event is in any observed processes list 506 in the record 312. If so, the security agent 318 also adds the process ID to the exited processes list 508 for the same entry in the malware detection record 312. In cases where the process termination request is rejected, the security agent 318 adds indicia (e.g., PID) for the process(es) that failed termination to the failed to kill processes list 512 of the malware verdict entry in the malware detection record 312.

At some point after the malware verdict is received and processed by the security agent 318, the security agent 318 receives a quarantine report associated with the malware. In some implementations, the quarantine report is received from another security software program executing on the endpoint computing device 300. The quarantine report comprises information associated with file quarantine operations being carried out on the endpoint computing device 300 in relation to the malware. For example, the endpoint computing device 300 can attempt to identify malware file(s) located on the endpoint computing device 300 and move the file(s) to another location (e.g., a quarantine directory) on the endpoint computing device 300-such that the file(s) cannot be subsequently copied or executed. The quarantine report details the file quarantine operations, including information such as file name(s), file type(s), file location(s), file quarantine operation(s) attempted, result of file quarantine operation(s) (e.g., success, failure).

The security agent 318 can update the malware detection record 312 based upon the quarantine report. In some implementations, the security agent 318 updates the quarantine operation result 514 for the malware verdict entry to include information from the quarantine report. Once the record 312 is updated, the security agent 318 can determine whether a malware termination operation is complete based upon the malware detection record 312. In some implementations, the security agent 318 can deem a malware termination operation as complete when the quarantine report for the malware verdict is received and the malware detection record 312 is updated. In some implementations, the security agent 318 can deem a malware termination operation as complete when the quarantine report for the malware verdict is received and all processes for which a process termination request was issued (i.e., processes identified in the killed processes list 510 and failed to kill processes list 512) have exited (and therefore placed in the exited processes list 508)-to ensure these processes cannot launch further processes. In some implementations, the security agent can deem a malware termination operation as complete when the quarantine report for the malware verdict is received and all process termination requests issued by the security agent 318 to the operating system 302 have received a response. The security agent 318 can then generate a final malware termination report indicating that all malware processes and their related processes (e.g., parents, children) have ceased execution on the endpoint computing device 300, and also indicating the outcome of the file quarantine operations.

In still other implementations, as a failsafe the security agent 318 deems a malware termination operation as complete after a defined amount of time has elapsed from the initial detection time 504 of the malware verdict (regardless of the state of the tracked processes in the record 312). In these implementations, the security agent 318 can generate a file malware termination report indicating the state of the malware detection (e.g., processes identified in the lists 506, 508, 510, 512) as reflected in the malware detection record 312.

The above systems, devices, methods, processes, and the like may be realized in hardware, software, or any combination of these suitable for a particular application. The hardware may include a general-purpose computer and/or dedicated computing device. This includes realization in one or more microprocessors, microcontrollers, embedded microcontrollers, programmable digital signal processors or other programmable devices or processing circuitry, along with internal and/or external memory. This may also, or instead, include one or more application specific integrated circuits, programmable gate arrays, programmable array logic components, or any other device or devices that may be configured to process electronic signals. It will further be appreciated that a realization of the processes or devices described above may include computer-executable code created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software. In another aspect, the methods may be embodied in systems that perform the steps thereof and may be distributed across devices in a number of ways. At the same time, processing may be distributed across devices such as the various systems described above, or all of the functionalities may be integrated into a dedicated, standalone device or other hardware. In another aspect, means for performing the steps associated with the processes described above may include any of the hardware and/or software described above. All such permutations and combinations are intended to fall within the scope of the present disclosure.

Embodiments disclosed herein may include computer program products comprising computer-executable code or computer-usable code that, when executing on one or more computing devices, performs any and/or all of the steps thereof. The code may be stored in a non- transitory fashion in a computer memory, which may be a memory from which the program executes (such as random-access memory associated with a processor), or a storage device such as a disk drive, flash memory or any other optical, electromagnetic, magnetic, infrared, or other device or combination of devices. In another aspect, any of the systems and methods described above may be embodied in any suitable transmission or propagation medium carrying computer- executable code and/or any inputs or outputs from same.

It will be appreciated that the devices, systems, and methods described above are set forth by way of example and not of limitation. Absent an explicit indication to the contrary, the disclosed steps may be modified, supplemented, omitted, and/or re-ordered without departing from the scope of this disclosure. Numerous variations, additions, omissions, and other modifications will be apparent to one of ordinary skill in the art. In addition, the order or presentation of method steps in the description and drawings above is not intended to require this order of performing the recited steps unless a particular order is expressly required or otherwise clear from the context.

The method steps of the implementations described herein are intended to include any suitable method of causing such method steps to be performed, consistent with the patentability of the following claims, unless a different meaning is expressly provided or otherwise clear from the context. So, for example, performing the step of X includes any suitable method for causing another party such as a remote user, a remote processing resource (e.g., a server or cloud computer) or a machine to perform the step of X. Similarly, performing steps X, Y and Z may include any method of directing or controlling any combination of such other individuals or resources to perform steps X, Y and Z to obtain the benefit of such steps. Thus, method steps of the implementations described herein are intended to include any suitable method of causing one or more other parties or entities to perform the steps, consistent with the patentability of the following claims, unless a different meaning is expressly provided or otherwise clear from the context. Such parties or entities need not be under the direction or control of any other party or entity and need not be located within a particular jurisdiction.

It should further be appreciated that the methods above are provided by way of example. Absent an explicit indication to the contrary, the disclosed steps may be modified, supplemented, omitted, and/or re-ordered without departing from the scope of this disclosure.

It will be appreciated that the methods and systems described above are set forth by way of example and not of limitation. Numerous variations, additions, omissions, and other modifications will be apparent to one of ordinary skill in the art. In addition, the order or presentation of method steps in the description and drawings above is not intended to require this order of performing the recited steps unless a particular order is expressly required or otherwise clear from the context. Thus, while particular embodiments have been shown and described, it will be apparent to those skilled in the art that various changes and modifications in form and details may be made therein without departing from the spirit and scope of this disclosure and are intended to form a part of the technology as defined by the following claims, which are to be interpreted in the broadest sense allowable by law.

### Numbered statements of invention

1. A system for terminating malware execution on an endpoint computing device, the system comprising:
   one or more computer-readable media having computer-executable instructions stored thereon; and
   one or more processors that, having executed the computer-executable instructions, are configured to:
      generate a shadow process data structure based on software process events captured on an endpoint computing device;
      create a malware detection record based upon a received malware verdict;
      detect one or more software processes in the shadow process data structure associated with a malware process identified in the malware verdict;
      update the malware detection record to include first indicia for the detected software processes;
      for each detected software process being executed:
         initiate a process termination request for the detected software process and update the malware detection record to include second indicia for the detected software process based upon acceptance or rejection of the process termination request, and
      for each detected software process that has completed execution:
         update the malware detection record to include third indicia for the detected software process; and
      determine whether a malware termination operation is complete on the endpoint computing device.
2. The system of statement 1, wherein the software process events include process creation events and process exit events.
3. The system of statement 2, wherein the software process events are captured from a circular buffer maintained by an operating system kernel on the endpoint computing device.
4. The system of any preceding statement, wherein the malware verdict is generated from an asynchronous scan of the endpoint computing device.
5. The system of any preceding statement, wherein detecting one or more software processes in the shadow process data structure associated with the malware process identified in the malware verdict comprises:
   detecting a first software process in the shadow process data structure that corresponds to the malware process; and
   navigating the shadow process data structure to detect one or more additional software processes that are related to the first software process.
6. The system of any preceding statement, wherein the first indicia for the detected software processes in the malware detection record comprises an identifier stored in an observed processes list.
7. The system of statement 6, wherein when the process termination request is accepted, the second indicia for the detected software processes in the malware detection record comprises an identifier stored in a killed processes list.
8. The system of statement 7, wherein when the process termination request is rejected, the second indicia for the detected software processes in the malware detection record comprises an identifier stored in a failed to kill processes list.
9. The system of any preceding statement, wherein the third indicia for the detected software processes in the malware detection record comprises an identifier stored in an exited processes list.
10. The system of any preceding statement, wherein the malware termination operation on the endpoint computing device is deemed to be complete upon receiving a quarantine report associated with the malware verdict and determining that any process terminations initiated in the operating system kernel have completed.
11. The system of any preceding statement, wherein the malware termination operation on the endpoint computing device is deemed to be complete upon expiration of a period of time after the malware verdict is received.
12. A computerized method of terminating malware execution on an endpoint computing device, the method comprising:
   generating a shadow process data structure on an endpoint computing device;
   creating a malware detection record based upon a received malware verdict;
   detecting one or more software processes in the shadow process data structure associated with a malware process identified in the malware verdict;
   for each detected software process being executed:
      initiating a process termination request for the detected software process and updating the malware detection record based upon acceptance or rejection of the process termination request, and
   determining whether a malware termination operation on the endpoint computing device is complete based on the malware detection record.
13. The method of statement 12, wherein the shadow process data structure is generated based on software process events captured on the endpoint computing device.
14. The method of statement 13, wherein the software process events are captured from a circular buffer maintained by an operating system kernel on the endpoint device.
15. The method of any of statements 12 to 14, wherein the malware verdict is generated from an asynchronous scan of the endpoint computing device.
16. The method of any of statements 12 to 15, wherein detecting one or more software processes in the shadow process data structure associated with the malware process identified in the malware verdict comprises:
   detecting a first software process in the shadow process data structure that corresponds to the malware process; and
   navigating the shadow process data structure to detect one or more additional software processes that are related to the first software process.
17. The method of any of statements 12 to 16, further comprising updating an observed processes list in the malware detection record with first indicia comprising identifiers for the detected software processes.
18. The method of statement 17, wherein when the process termination request is accepted, further comprising updating a killed process list in the malware detection record with second indicia comprising an identifier for the detected software process.
19. The method of statement 17 or 18, wherein when the process termination request is rejected, further comprising updating a failed to kill process list in the malware detection record with second indicia comprising an identifier for the detected software process.
20. The method of any of statements 12 to 19, further comprising, for each detected software process that has completed execution:
   updating an exited processes list in the malware detection record with third indicia comprising an identifier an identifier for the detected software process.
21. The method of any of statements 12 to 20, wherein the malware termination operation is deemed to be complete upon receiving a quarantine report associated with the malware verdict and determining that any process terminations initiated in the operating system kernel have completed.
22. The method of any of statements 12 to 21, wherein the malware termination operation is deemed to be complete upon expiration of a period of time after the malware verdict is received.

## Claims

1. A system for terminating malware execution on an endpoint computing device, the system comprising:
one or more computer-readable media having computer-executable instructions stored thereon; and
one or more processors that, having executed the computer-executable instructions, are configured to:
generate a shadow process data structure based on software process events captured on an endpoint computing device;
create a malware detection record based upon a received malware verdict;
detect one or more software processes in the shadow process data structure associated with a malware process identified in the malware verdict;
update the malware detection record to include first indicia for the detected software processes;
for each detected software process being executed:
initiate a process termination request for the detected software process and update the malware detection record to include second indicia for the detected software process based upon acceptance or rejection of the process termination request, and
for each detected software process that has completed execution:
update the malware detection record to include third indicia for the detected software process; and
determine whether a malware termination operation is complete on the endpoint computing device.

2. The system of claim 1, wherein the software process events include process creation events and process exit events, and wherein the software process events are captured from a circular buffer maintained by an operating system kernel on the endpoint computing device.

3. The system of any preceding claim, wherein the malware verdict is generated from an asynchronous scan of the endpoint computing device.

4. The system of any preceding claim, wherein detecting one or more software processes in the shadow process data structure associated with the malware process identified in the malware verdict comprises:
detecting a first software process in the shadow process data structure that corresponds to the malware process; and
navigating the shadow process data structure to detect one or more additional software processes that are related to the first software process.

5. The system of any preceding claim, wherein:
the first indicia for the detected software processes in the malware detection record comprises an identifier stored in an observed processes list;
the process termination request is accepted, the second indicia for the detected software processes in the malware detection record comprises an identifier stored in a killed processes list; and
when the process termination request is rejected, the second indicia for the detected software processes in the malware detection record comprises an identifier stored in a failed to kill processes list.

6. The system of any preceding claim, wherein the third indicia for the detected software processes in the malware detection record comprises an identifier stored in an exited processes list.

7. The system of any preceding claim, wherein the malware termination operation on the endpoint computing device is deemed to be complete upon:
receiving a quarantine report associated with the malware verdict and determining that any process terminations initiated in the operating system kernel have completed; or
upon expiration of a period of time after the malware verdict is received.

8. A computerized method of terminating malware execution on an endpoint computing device, the method comprising:
generating a shadow process data structure on an endpoint computing device;
creating a malware detection record based upon a received malware verdict;
detecting one or more software processes in the shadow process data structure associated with a malware process identified in the malware verdict;
for each detected software process being executed:
initiating a process termination request for the detected software process and updating the malware detection record based upon acceptance or rejection of the process termination request, and
determining whether a malware termination operation on the endpoint computing device is complete based on the malware detection record.

9. The method of claim 8, wherein the shadow process data structure is generated based on software process events captured on the endpoint computing device, and wherein the software process events are captured from a circular buffer maintained by an operating system kernel on the endpoint device.

10. The method of claim 8 or 9, wherein the malware verdict is generated from an asynchronous scan of the endpoint computing device.

11. The method of any of claims 8 to 10, wherein detecting one or more software processes in the shadow process data structure associated with the malware process identified in the malware verdict comprises:
detecting a first software process in the shadow process data structure that corresponds to the malware process; and
navigating the shadow process data structure to detect one or more additional software processes that are related to the first software process.

12. The method of any of claims 8 to 11, further comprising updating an observed processes list in the malware detection record with first indicia comprising identifiers for the detected software processes,
wherein when the process termination request is accepted, further comprising updating a killed process list in the malware detection record with second indicia comprising an identifier for the detected software process,
wherein when the process termination request is rejected, further comprising updating a failed to kill process list in the malware detection record with second indicia comprising an identifier for the detected software process.

13. The method of any of claims 8 to 12, further comprising, for each detected software process that has completed execution:
updating an exited processes list in the malware detection record with third indicia comprising an identifier an identifier for the detected software process.

14. The method of any of claims 8 to 13, wherein the malware termination operation is deemed to be complete upon receiving a quarantine report associated with the malware verdict and determining that any process terminations initiated in the operating system kernel have completed.

15. The method of any of claims 8 to 14, wherein the malware termination operation is deemed to be complete upon expiration of a period of time after the malware verdict is received.
